# EUROPÄISCHE PATENTANMELDUNG

(11) **EP 4 345 119 A1**
(43) Veröffentlichungstag der Anmeldung: **03.04.2024**
(21) Anmeldenummer: 22198130.1
(22) Anmeldetag: 27.09.2022
(51) Int. Cl.: C08G 59/40

(54) **HOCHTEMPERATURHARZ, FORMKÖRPER DARAUS UND VERBUND AUS DEM FORMKÖRPER UND EINEM ELEMENT EINES LEISTUNGSELEKTRONISCHEN BAUTEILS**

(71) Anmelder: Siemens Aktiengesellschaft, 80333 München (DE)
(72) Erfinder: Höhn, Klaus, 91301 Forchheim (DE)
(74) Vertreter: Siemens Patent Attorneys

(57) **Zusammenfassung**

Die Erfindung betrifft ein Hochtemperaturharz, einen Formkörper daraus und einen Verbund aus dem Formkörper und einem Element eines leistungselektronischen Bauteils. Durch die Auswahl, Kombination und/oder Mengenanteile der Inhaltsstoffe können die Harzzusammensetzungen nach der vorliegenden Erfindung für eine breite Palette von Anwendungsformen und Prozesse wie Vergießen, Bonden, Abdecken, Verkapseln, Füllen, insbesondere "underfill" und/oder "sidefill" leistungselektronischer Bauelemente eingesetzt werden. Die Harzzusammensetzung stellt damit Produkt- und Systemlösungen, die hohe Einsatztemperaturen und eine ausreichend hohe elektrische Durchschlagfestigkeit für Anwendungen in der Leistungselektronik erfordern, bereit. Hinzu kommt die Konformität der Harzzusammensetzung mit den Anforderungen an so genannte "green products", die hier erfüllt werden. Insbesondere bei der Auswahl der Verbindungen der Komponente **B,** werden, sowohl hinsichtlich der Phthalsäuranhydrid-Verbindung als auch hinsichtlich der Imidazol-Verbindung eine enge Auswahl eingesetzt, die gemäß der REACH-Richtlinie empfohlen ist.

## Beschreibung

Die Erfindung betrifft ein Hochtemperaturharz, einen Formkörper daraus und einen Verbund aus dem Formkörper und einem Element eines leistungselektronischen Bauteils.

"Grüne" Hochtemperaturpolymere, also Polymere mit einer Glasübergangstemperatur von mindestens 170°C, zum Vergießen, Casting, Füllen und/oder Kleben bei der Herstellung leistungselektronischer Bauteile sind wichtige strategische Materialien für zukünftige nachhaltige elektronische und leistungselektronische Komponenten. Diese werden insbesondere auch grüne Hochtemperaturharze genannt, wobei "grün" im Sinne von "green products" hier für Nachhaltigkeit und Konformität mit nationalen, regionalen und/oder internationalen Chemikalienverordnungen steht.

Zur Herstellung leistungselektronischer Produkte werden fertigungstaugliche Hochtemperaturharze in der Aufbau- und Verbindungstechnik als Isolierwerkstoffe mit einer Glasübergangstemperatur von ca. 180°C oder mehr zum Vergießen, Kleben, Verkapseln, Bonden, als Abdeckung und/oder als Under-/Sidefiller eingesetzt. Diese Systeme können als 1-K "Komponenten"-Systeme oder 2K-Systeme, wobei zwei Komponenten, Harz und Härter, unmittelbar vor der Verarbeitung vermischt werden, weil sie als Mischung nicht lagerstabil sind, vorliegen Dafür geeignete Harzsysteme halten die Einsatztemperaturen aus und zeigen elektrische Durchschlagsfestigkeit für Anwendungen in der Leistungselektronik.

Die bekannten Harze für dieses Eigenschaftsprofil sind nicht immer REACH und/oder RoHS konform. Die RoHS-Richtlinie - EU RiLi 2011/65/EU dient der Beschränkung der Verwendung bestimmter gefährlicher Stoffe in Elektro- und Elektronikgeräten. Sie regelt die Verwendung und das Inverkehrbringen von Gefahrstoffen in Elektrogeräten und elektronischen Bauelementen.

Die REACH Verordnung EG Nr. 1907/2006 ist eine EU-Chemikalienverordnung, die am 1. Juni 2007 in Kraft getreten ist. "REACH" steht für Registration, Evaluation, Authorization and Restriction of Chemicals.

Neuerdings unterliegen Bisphenol-A-Epoxidharze EU-Einfuhrbeschränkungen, sie müssen gemäß ECHA (European Chemicals Agency) aufgrund von REACH-Verordnungen registriert werden. Durch weitere zukünftige Beschränkungen kann deren Verwendung im EU-Raum untersagt werden.

Es besteht daher der Bedarf, insbesondere zur Herstellung leistungselektronischer Module der nächsten Generation temperaturbeständige Isolationsharze mit einer Glasübergangstemperatur von mindestens 170°C, die auf flüssig-applizierbaren Epoxidharzen basieren, zur Verfügung zu stellen.

Diese Aufgabe wird durch den Gegenstand der vorliegenden Erfindung gelöst.

Gegenstand der vorliegenden Erfindung ist daher eine flüssig applizierbare Harzzusammensetzung mit einer Glasübergangstemperatur von 170°C oder höher, die frei von Bisphenol-A, insbesondere frei von Bisphenolen-A der CAS Nr. 25068-38-6, ist.

Insbesondere ist Gegenstand der vorliegenden Erfindung eine flüssig applizierbare Harzzusammensetzung mit einer Glasübergangstemperatur von 170°C oder höher, zumindest eine Epoxidharz-Komponente **A** und eine Härter-Komponente **B** umfassend, wobei die

Epoxidharz-Komponente **A** mindestens die folgenden Bestandteile enthält
a) 80Gew% oder mehr an 3,4-Epoxycyclohexancarbonsäure-(3,4-epoxycyclohexalmethylester) mit der
   Strukturformel **I** und der CAS Nummer: 2386-87-0 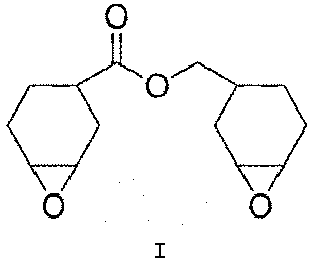 und
b) 20 Gew% oder weniger eines mehrwertigen Alkohols und die
   Härter-Komponente B mindestens die Bestandteile c) und d) umfasst, wobei
c) 90 Gew% eines Methyl-tetra-hydrophthalsäureanhydrids MTHPA und
d) 0,3 bis 5 Gew% eines Imidazols
ist.

Außerdem ist Gegenstand der vorliegenden Erfindung ein Formkörper, erhältlich durch Aushärten einer Harzzusammensetzung wie oben beschrieben.

Schließlich ist Gegenstand der vorliegenden Erfindung ein Verbund mit einer Harzzusammensetzung wie oben beschrieben oder eines daraus hergestellten Formkörpers.

Vorzugsweise liegen die Komponenten **A** und **B** in der Harzzusammensetzung in folgenden Verhältnissen vor:
Epoxidharz-Komponente **A** und Härter-Komponente **B** im Verhältnis **A** zu **B** im Bereich von 100:90 bis 100:125, vorzugsweise 100:100 bis 100:120.

In der Epoxidharz-Komponente **A** liegt der 3,4-Epoxycyclohexancarbonsäure-(3,4-epoxycyclohexalmethylester) in einem Anteil an Gew% bezogen auf 100Gew% Komponente **A** von mindestens ungefähr 80Gew% bis ungefähr 95Gew% vor. Vorzugsweise liegt der Anteil des 3,4-Epoxycyclohexancarbonsäure-(3,4-epoxycyclohexalmethylester) in der Komponente **A** im Bereich von 85 Gew% bis 93 Gew% vor.

Der mehrwertige Alkohol, also eine Kohlenwasserstoff-Verbindung mit zumindest zwei Hydroxylgruppen, liegt in der Epoxidharz-Komponente **A** in einem Anteil in Gew% von höchstens 20 Gew%, vorzugsweise von höchstens 15 Gew% vor. Insbesondere liegt der mehrwertige Alkohol im Bereich von 1 bis 15 Gew%, insbesondere von 3 Gew% bis 10 Gew% vor.

In der Härter-Komponente **B** liegt das MTHPA vorzugsweise in einem Anteil von 93Gew% bis 99Gew%, vorzugsweise von 95Gew% bis 99,5Gew%, vor.

In der Harzzusammensetzung können, je nach gewünschter Harzapplikation und Prozesstechnologie weitere Additive, die dem Fachmann bekannt sind, enthalten sein. Auch die Menge an üblichen Harzadditiven richtet sich nach Bedarf und liegt in den üblichen Konzentrationen. Beispielsweise können zur Verwendung Thixotropier-, Benetzungs- und/oder Verlaufshilfsmittel, sowie Entlüfter, Haftvermittler, Antioxidantien und/oder Färbemittel eingesetzt werden. Aufgrund der Vielzahl an kommerziell erhältlichen und hier gut einsetzbaren Additiven sollen diese hier nicht näher spezifiziert werden.

Beispielsweise liegt im Verbund die Harzzusammensetzung in der Funktion eines Klebers zwischen dem Substrat und einer Leiterplatte, einer Platine und/oder einem Wafer mit einem Produkt und/oder Bauteil aus dem Bereich der Leistungselektronik vor.

Als typisches Produkt aus dem Bereich der Leistungselektronik können beispielsweise IGBT-Bauteile angesehen werden.

IGBTs sind typische Produkte der Leistungselektronik. "IGBT" steht für "Insulated Gate Bipolar Transistor" im Bereich von 10kW bis 350 kW erhältlich von 50A bis 600 A bei 1200V.

Die Harzzusammensetzung gemäß der vorliegenden Erfindung ist ein strategisches Material für die Leistungselektronik, weil sie das Anforderungsprofil an die neue Generation - speziell auch im Hinblick auf die Durchschlagsfestigkeit und Glasübergangstemperatur - und auch die Anforderungen der geltenden Gesundheitsrichtlinien und Verordnungen erfüllt.

Der Verbund aus dem Formkörper, der durch Härtung der Harzzusammensetzung herstellbar ist und dem leistungselektronischen Bauteil zeigt Grenzflächen zwischen dem Formkörper und dem Bauteil, insbesondere zumindest eine Grenzfläche zwischen dem Formkörper und einem metallischen Element des Bauteils und/oder einem keramischen, z.B. metalloxidischen, nidridischen Element des Bauteils.

Nach einer vorteilhaften Ausführungsform der Erfindung liegt die Verbundfestigkeit eines Verbunds aus der Harzzusammensetzung hergestellten Formkörpers mit Metall oder Metalllegierung wie Silber, Gold, oder einer Keramik wie Metalloxid, Metallnitrid etc. bei RT bei mindestens 20 MPA und bei 150°C immer noch bei minimal 10MPA.

Nach einer vorteilhaften Ausführungsform der Erfindung liegt die Temperaturstabilität eines derartigen Verbunds getestet z.B. mit Silber, Gold, Metalloxid, und/oder Keramik - als "Verbundfestigkeit" - nach 6 Wochen bei 180°C immer noch von minimal 20 MPA bei Raumtemperatur.

Bezüglich der Korrosionseigenschaften zeigt eine vorteilhafte Ausführungsform der Erfindung einen Gesamtchlorgehalt in der Harzzusammensetzung und/oder im Formkörper von maximal 200ppm, bei den ungefüllten Harzzusammensetzung sogar von maximal 100ppm, vorzugsweise maximal 50 ppm, der Formkörper liegt also sehr Chlor-reduziert vor.

Die Harzzusammensetzung ist vorteilhafterweise frei von Bestandteilen wie Lösungsmittel, Silikone, schwefelhaltige Verbindungen und/oder Ammonium-Ionen, weil darunter Prozessfähigkeit, Haftungseigenschaften und/oder Korrosionsbeständigkeit des Formkörpers leiden.

Die Harzzusammensetzung ist nach einer vorteilhaften Ausführungsform bei -30°C mindestens 4 Monate - bei -40°C mindestens 6 Monate - als 1-komponentiges System lagerstabil, bei Raumtemperatur als 2-komponentiges System, wobei Komponente **A** von Komponente **B** getrennt gelagert ist, auch mindestens 6 Monate.

Die Glasübergangstemperatur Tg der Formkörper ist nach einer vorteilhaften Ausführungsform mindestens bei 170°C, bevorzugt mindestens 180°C, gemessen mit Dynamisch-mechanischer Analyse DMA.

Nach einer vorteilhaften Ausführungsform der Erfindung umfasst die Epoxidharz-Komponente **A** eine weitere EpoxidharzVerbindung in Form eines Poly-glycidylether-Formaldehyds, z.B. die Verbindung Poly-[(phenyl-glycidylether)-*co-*formaldehyd] mit der CAS Nr. 28064-14-4 und der Strukturformel **II**

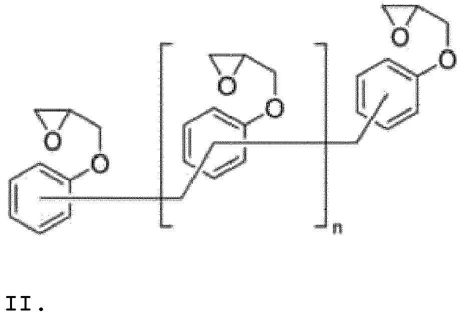

Beispielsweise liegt diese Verbindung in der Komponente **A** mit einem Anteil im Bereich von 0Gew% bis zu 20 Gew% vor.

Nach einer vorteilhaften Ausführungsform liegt in der Komponente **A** der mehrwertige Alkohol in Form eines Tricyclodecandimethylol "TCD-OH" mit der in Strukturformel **III** gezeigten Struktur vor.

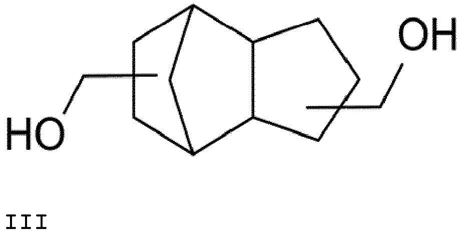

Diese farblose, viskose Flüssigkeit mit der Summenformel C₁₂H₂₀O₂ und der molaren Masse von 196,29g/mol ist unter mehreren Namen im Handel, beispielsweise
- Octahydro-4,7-methano-1H-indendimethanol
- 4,8-Bis(hydroxymethyl)tricyclo[5.2.1.02,6]decan, Isomerengemisch
- [8-(hydroxynethyl)-3-tricyclo[5.2.1.02,6]decanyl]methanol (IUPAC)
- TCD Alkohol DM

Der Schmelzpunkt liegt bei 18°C. Das Isomerengemisch umfasst 32 mögliche Isomere, die durch die regio- und stereochemisch unselektive Hydroformylierung eines Dicyclopentadiens bei der Synthese entstehen können. So gibt es zu dem Tricyclodecandimethylol mehrere CAS-Nummern. Beispielsweise fallen die Verbindungen der CAS Nummern CAS 26896-48-0, CAS 26160-83-8 und/oder CAS 68398-16-3 darunter.

Nach einer weiteren vorteilhaften Ausführungsform der Erfindung umfasst die Komponente **A** eine weitere EpoxidharzVerbindung, z.B. mit der CAS Nr. 68608-97-2, Araldite^{®} DY-E. Das ist ein Monoglycidylether eines C12 bis C14-Alkohols der Fa. Huntsman, der als monofunktioneller, aliphatischer Reaktivverdünner für Epoxidharze einsetzbar ist. Der Monoglycidylether ist nach dieser vorteilhaften Ausführungsform in einer Menge von 0 bis 10 Gew%, bevorzugt im Bereich von 1Gew% bis 8Gew%, in der Komponente **A** vorgesehen.

Bei der Monoglycidyletherkomponente als eine zweite oder dritte Epoxidharzverbindung in Komponente **A** handelt es sich insbesondere um einen längerkettigen Monoglycidylether, wie z.B. einen der vorzugsweise mindestens 8 Kohlenstoffatome aliphatisch, nicht aromatisch verbunden und insbesondere bevorzugt geradkettig, nicht verzweigt verbunden, umfasst.

Der Monoglycidylether dient hier insbesondere zur Anpassung der thermomechanischen Eigenschaften, kann aber auch als Reaktivverdünner bezeichnet werden.

Nach einer weiteren vorteilhaften Ausführungsform der Erfindung liegt in der Komponente **A** ein mehrwertiger Alkohol in Form eines geradkettigen oder verzweigtkettigen Alkylalkohols vor. Beispielsweise kann dieser in Form eines 1,2 Propandiols, eines Butandiols, eines Trimethylolpropans vorliegen. Der Gesamtgehalt an allen mehrwertigen Alkoholen liegt bevorzugt bei 15Gew%, insbesondere vorzugsweise bei 10Gew%.

Nach einer vorteilhaften Ausführungsform ist der Formkörper aus einer Harzzusammensetzung nach der Erfindung erhältlich durch Aushärten der Harzzusammensetzung bei Temperaturen im Bereich 100 °C bis 160 °C, vorzugsweise 120 °C bis 150 °C.

Nach einer weiteren vorteilhaften Ausführungsform der Erfindung liegen in der Harzzusammensetzung Füllstoffe vor. Dabei können die Viskosität der Harzzusammensetzung, die gewünschten thermomechanischen Eigenschaften durch so genannte "electronic grade" Füllstoffe in weiten Grenzen eingestellt werden.

Als "electronic grade" - Füllstoffe werden hochreine Füllstoffe bezeichnet, die geringe Konzentrationen im ppm-Bereich kleiner 100ppm, an ionischen Verunreinigungen enthalten und damit eben nur ein besonders geringes Korrosionspotenzial in das Produkt einbringen.

Als Füllstoffe können anorganische Metalloxide, beispielsweise von den Elementen Silizium, Aluminium, Zirkonium, Yttrium, Zink allein oder in Mischmetalloxiden vorliegen. Des Weiteren können ergänzend oder alternativ dazu metallische Nitride, Silikate, Carbonate und/oder Glaskeramikpulver als Füllstoffe in Kombination oder allein eingesetzt werden. Alle vorgenannten Füllstoffe können miteinander in verschiedenen Fraktionen kombiniert vorliegen, wobei Form, Oberflächenbeschaffenheit und Größe der einzelnen Partikel beliebig wählbar sind.

Nach einer vorteilhaften Ausführungsform der Erfindung haben die Füllstoffe einen möglichst geringen ionischen Alkali-, Erdalkali- und/oder Eisengehalt. Typischerweise sollte der Gehalt an diesen Elementen ein ungefähres Maximum von 10ppm zeigen.

Nach einer weiteren vorteilhaften Ausführungsform ist vorgesehen, dass die durchschnittliche Partikelgröße oder Korngröße unter 70µm, bevorzugt kleiner 60µm und insbesondere bevorzugt kleiner 55µm ist. Ganz bevorzugt liegt die Korngröße der Füllstoffpartikel unter 53µm "cut-off".

Als "cut-off" werden größere Partikel werden abgetrennt, z. B. gesiebt. Dieser Trennprozess ist aufwendig und mit einem großen Materialverlust verbunden, so dass diese Füllstoffe sehr teuer sind.

Der Anteil an Füllstoff in der Harzzusammensetzung liegt nach einer vorteilhaften Ausführungsform im Bereich zwischen 40 bis 85 Gew%, vorzugsweise zwischen 50 bis 80 Gew%, bezogen auf die Gesamtmasse der Harzzusammensetzung.

Durch die Auswahl, Kombination und/oder Mengenanteile der Inhaltsstoffe können die Harzzusammensetzungen nach der vorliegenden Erfindung für eine breite Palette von Anwendungsformen und Prozesse wie Vergießen, Bonden, Abdecken, Verkapseln, Füllen, insbesondere "underfill" und/oder "sidefill" leistungselektronischer Bauelemente eingesetzt werden. Die Harzzusammensetzung stellt damit Produkt- und Systemlösungen, die hohe Einsatztemperaturen und eine ausreichend hohe elektrische Durchschlagfestigkeit für Anwendungen in der Leistungselektronik erfordern, bereit. Hinzu kommt die Konformität der Harzzusammensetzung mit den Anforderungen an so genannte "green products", die hier erfüllt werden.

Im Folgenden wird die Erfindung anhand beispielhafter Harzzusammensetzungen näher erläutert:
Das zur DSC Messung eingesetzte Messgerät ist eine DSC8000 von Perkin Elmer, wobei eine Heizrate von 10 K/min - in gekennzeichneten Ausnahmen von 40K/min - im Temperaturbereich von 40 °C bis 260 °C verwendet wurde.

### Beispiel 1:

Komponente **A** (damit ist in allen Beispielen die Epoxidharz-Komponente gemeint) und Komponente **B** (damit ist in allen Beispielen die Härter-Komponente gemeint) liegen im Verhältnis 100:110 vor. In der Komponente **B** liegt das Imidazol, beispielsweise 1,2-Dimehthylimidazol, in einer Menge von 1,5 Gew% vor. In der Komponente **A** liegt der mehrwertige Alkohol in einer Menge von 5 Gew% vor. Der Tg gemessen mit DSC liegt bei 194°C.

### Beispiel 2:

Komponente **A** und Komponente **B** liegen im Verhältnis 100:120 vor. In der Komponente **B** liegt das Imidazol in einer Menge von 1,5 Gew% vor. In der Komponente **A** liegt der mehrwertige Alkohol in einer Menge von 5 Gew% vor. Der Tg gemessen mit DSC liegt bei 193°C, gemessen mit 40K/min.

### Beispiel 3:

Komponente **A** und Komponente **B** liegen im Verhältnis 100:110 vor. In der Komponente **A** liegt das Epoxid mit der Strukturformel **I** und der CAS Nr. 2386-87-0 in einem Anteil von 95Gew% und der Monoglycidylether mit der CAS Nr. 68608-97-2, z.B. Araldite^{®} DY-E, in einem Anteil von 3 Gew% vor. Der mehrwertige Alkohol, vorzugsweise in Form eines Tricyclodecandimethylol "TCD-OH" mit der Struktur gemäß Strukturformel **III** liegt in einer Menge von 2 Gew% vor. In der Komponente **B** liegt das Imidazol in einer Menge von 1,5 Gew% vor. Der Tg gemessen mit DSC liegt bei 189°C.

### Beispiel 4:

Komponente **A** und Komponente **B** liegen im Verhältnis 100:110 vor. In der Komponente **A** liegt das Epoxid mit der Strukturformel **I** und der CAS Nr. 2386-87-0 in einem Anteil von 95Gew% und der Monoglycidylether mit der CAS Nr. 68608-97-2, z.B. Araldite^{®} DY-E, in einem Anteil von 3 Gew% vor. Der mehrwertige Alkohol, vorzugsweise in Form eines Tricyclodecandimethylol "TCD-OH" mit der Struktur gemäß Strukturformel **III** liegt in einer Menge von 2 Gew% vor. In der Komponente **B** liegt das Imidazol in einer Menge von 2 Gew% vor. Der Tg gemessen mit DSC liegt bei 181°C.

### Beispiel 5:

Komponente **A** und Komponente **B** liegen im Verhältnis 100:120 vor. In der Komponente **B** liegt das Imidazol in einer Menge von 1,5 Gew% vor. In der Komponente **A** liegt der mehrwertige Alkohol in einer Menge von 7 Gew% vor. Der Tg gemessen mit DSC liegt bei 199°C, gemessen mit 40K/min.

Die elektrische Durchschlagsfestigkeit einer beispielhaften bevorzugten Ausführungsform eines Formkörpers, der durch Härtung einer hier beschriebenen Harzzusammensetzung erhältlich ist, beträgt mindestens 25 kV/mm², vorzugsweise mindestens 30 kV/mm².

Die Ermittlung der Durchschlagfestigkeit erfolgte angelehnt an DIN EN60243-1 an ca. 0,5 mm dicken, runden Formkörpern, einer 20 mm Kugelelektrode und einer Ramp-Rate von 500 V/sec.

Durch die Auswahl, Kombination und/oder Mengenanteile der Inhaltsstoffe können die Harzzusammensetzungen nach der vorliegenden Erfindung für eine breite Palette von Anwendungsformen und Prozesse wie Vergießen, Bonden, Abdecken, Verkapseln, Füllen, insbesondere "underfill" und/oder "sidefill" leistungselektronischer Bauelemente eingesetzt werden. Die Harzzusammensetzung stellt damit Produkt- und Systemlösungen, die hohe Einsatztemperaturen und eine ausreichend hohe elektrische Durchschlagfestigkeit für Anwendungen in der Leistungselektronik erfordern, bereit. Hinzu kommt die Konformität der Harzzusammensetzung mit den Anforderungen an so genannte "green products", die hier erfüllt werden. Insbesondere bei der Auswahl der Verbindungen der Komponente **B,** werden, sowohl hinsichtlich der Phthalsäuranhydrid-Verbindung als auch hinsichtlich der Imidazol-Verbindung eine enge Auswahl eingesetzt, die gemäß der REACH-Richtlinie empfohlen ist.

## Patentansprüche

1. Harzzusammensetzung mit einer Glasübergangstemperatur von 170°C oder höher, zumindest eine Epoxidharz-Komponente **A** und eine Härter-Komponente **B** umfassend, wobei die
Epoxidharz-Komponente **A** mindestens die folgenden Bestandteile enthält
a) 80Gew% oder mehr an 3,4-Epoxycyclohexancarbonsäure-(3,4-epoxycyclohexalmethylester) mit der
Strukturformel **I** und der CAS Nummer: 2386-87-0 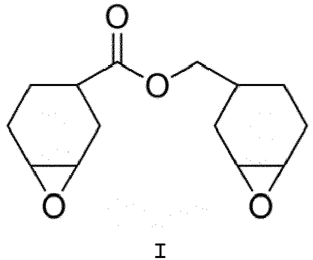 und
b) 20 Gew% oder weniger eines mehrwertigen Alkohols und die
Härter-Komponente **B** mindestens die Bestandteile c) und d) umfasst, wobei
c) 90 Gew% eines Methyl-tetra-hydrophthalsäureanhydrids MTHPA und
d) 0,3 bis 5 Gew% eines Imidazols umfasst.

2. Harzzusammensetzung nach Anspruch 1, bei der die Epoxidharz-Komponente **A** und zur Härter-Komponente **B** im Verhältnis **A** zu **B** im Bereich von 100:90 bis 100:125 vorliegen.

3. Harzzusammensetzung nach Anspruch 2, bei der Epoxidharz-Komponente **A** und zur Härter-Komponente **B** im Verhältnis **A** zu **B** im Bereich von 100:100 bis 100:120 vorliegen.

4. Harzzusammensetzung nach einem der vorstehenden Ansprüche, bei der in der Epoxidharz-Komponente **A** der 3,4-Epoxycyclohexancarbonsäure-(3,4-epoxycyclohexalmethylester) in einem Anteil an Gew% bezogen auf die Epoxidharz-Komponente **A** von mindestens ungefähr 80Gew% bis ungefähr 95Gew% vorliegt.

5. Harzzusammensetzung nach einem der vorstehenden Ansprüche, bei der in der Epoxidharz-Komponente **A** der mehrwertige Alkohol in einem Anteil an Gew% bezogen auf die Epoxidharz-Komponente **A** von maximal 15 Gew% vorliegt.

6. Harzzusammensetzung nach einem der vorstehenden Ansprüche, bei der in der Epoxidharz-Komponente **A** eine weitere Epoxidharz-Verbindung in Form eines Poly-[(phenyl-glycidylether)-co-formaldehyd] mit der CAS Nr. 28064-14-4 und der Strukturformel **II** 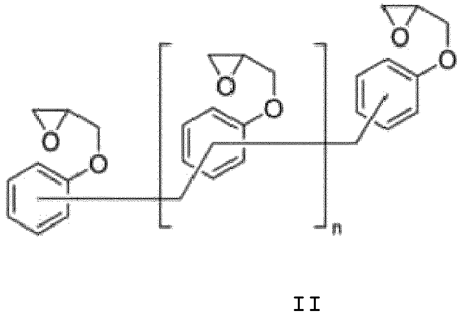 vorliegt.

7. Harzzusammensetzung nach einem der vorstehenden Ansprüche, bei der in der Epoxidharz-Komponente **A** der mehrwertige Alkohol in Form eines Tricyclodecandimethylol "TCD-OH" mit der in Strukturformel **III** gezeigten Struktur 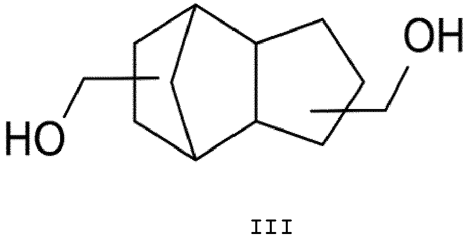 vorliegt.

8. Harzzusammensetzung nach einem der vorstehenden Ansprüche, bei der in der Epoxidharz-Komponente **A** eine weitere Epoxidharz-Verbindung in Form eines Poly-glycidylether-Formaldehyds, z.B. die Verbindung Poly-[(phenylglycidylether)-co-formaldehyd] mit der CAS Nr. 28064-14-4 und der Strukturformel **II** 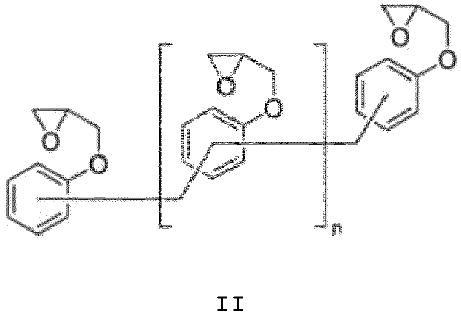 vorliegt.

9. Harzzusammensetzung nach einem der vorstehenden Ansprüche, bei der in der Komponente **A** eine weitere EpoxidharzVerbindung in Form eines Monoglycidylethers vorliegt.

10. Harzzusammensetzung nach einem der vorstehenden Ansprüche, in der Füllstoffpartikel vorliegen.

11. Harzzusammensetzung nach einem der vorstehenden Ansprüche, in der Füllstoffpartikel in einer Menge von 40 bis 85 Gew%, bezogen auf die Gesamtmasse der Harzzusammensetzung, vorliegen.

12. Formkörper, erhältlich durch Aushärten einer Harzzusammensetzung nach einem der Ansprüche 1 bis 11.

13. Verbund aus einem Formkörper nach Anspruch 12 und einem leistungselektronischen Bauelement.

14. Verbund nach Anspruch 13, wobei im Verbund eine Grenzfläche Metall-Formkörper vorliegt.

15. Verbund nach einem der Ansprüche 13 oder 14, wobei im Verbund zumindest eine Grenzfläche Keramik- und/oder Polyimid- einerseits und Formkörper nach Anspruch 12, andererseits, vorliegt.
